# EUROPÄISCHE PATENTSCHRIFT

(11) **EP 0 491 225 B1**
(45) Veröffentlichungstag und Bekanntmachung des Hinweises auf die Patenterteilung: **27.03.1996**
(21) Anmeldenummer: 91120743.9
(22) Anmeldetag: 03.12.1991
(51) Int. Cl.: C08F 210/02

(54) **Verfahren zur Herstellung von Ethylen-Alkylcarbonsäurevinylester-Mischpolymerisaten**
Process for producing copolymers of ethylene and alkylcarboxylic acid-vinyl esters
Procédé de préparation de copolymères de l'éthylène et d'esters vinyliques d'acides carboxyliques d'alkyle

(30) Priorität: 15.12.1990 DE 4040228
(43) Veröffentlichungstag der Anmeldung: 24.06.1992
(73) Patentinhaber: HOECHST AKTIENGESELLSCHAFT, D-65926 Frankfurt am Main (DE)
(72) Erfinder: Reimann, Werner, Dr. Dipl.-Chem., W-4100 Duisburg (DE); Zoller, Wilhelm, Dr. Dipl.-Chem., W-4200 Oberhausen (DE); Bühnen, Heinz-Dieter, Dipl.-Ing, W-4200 Oberhausen (DE)

(56) Entgegenhaltungen:
- EP-A- 0 096 221
- EP-A- 0 175 316
- DE-A- 3 227 746
- DE-B- 1 147 799

## Beschreibung

Die Erfindung betrifft ein Verfahren zur Herstellung von Ethylen-Alkylcarbonsäurevinylester-Mischpolymerisaten. Es beruht auf einer bestimmten Führung der Stoffströme zur Reaktionszone und liefert hervorragend filtrierbare Polymerisate in hoher Ausbeute.

Mischpolymerisate aus Ethylen und einem Alkylcarbonsäureester sind bekannt. Insbesondere Polymerisate aus Ethylen und Vinylacetat haben in der mineralölverarbeitenden Industrie als Additive zur Verbesserung der Fließfähigkeit von Erdölmitteldestillaten, wie leichtem Heizöl oder Dieselkraftstoff, Bedeutung erlangt. Ihre Wirkung beruht darauf, daß sie Größe und Form der Paraffinkristalle verändern, die sich beim Abkühlen der genannten Mineralölfraktionen bilden.

Die Herstellung der genannten Mischpolymerisate kann auf verschiedenen Wegen erfolgen. Nach der DE 11 47 799 C1 erhält man Mischpolymerisate mit einem Molekulargewicht zwischen etwa 1000 und 3000 aus Ethylen und einem olefinisch ungesättigten aliphatischen Monomeren mit 3 bis 5 Kohlenstoffatomen je Molekül, vorteilhaft durch Polymerisation in Lösung in Benzol bei etwa 150°C als bevorzugter Temperatur und etwa 5,5 MPa als bevorzugtem Druck. Die Reaktion wird in einem Autoklav oder einer sonstigen Vorrichtung durchgeführt, die das Lösungsmittel, den Initiator und das ungesättigte aliphatische Monomere, nämlich Vinylacetat, enthält.

Ein anderes Verfahren zur Herstellung von Mischpolymerisaten des Ethylens mit ungesättigten Carbonsäuremono- oder -diestern ist Gegenstand der DE 19 14 756 A1. Es ist im wesentlichen dadurch charakterisiert, daß man die Monomeren in einem inerten Lösungsmittel unter Verwendung eines Katalysators mit einer Halbwertszeit bei 130°C von weniger als einer Stunde radikalisch mischpolymerisiert.

Ethylen und Vinylester können auch in Abwesenheit eines Lösungsmittels mischpolymerisiert werden. Ein entsprechendes Verfahren ist Gegenstand der DE 21 02 469 C2. Man arbeitet bei Drücken zwischen 150 und 300 MPa, kann aber auch 700 MPa anwenden. Die Polymerisationstemperaturen liegen zwischen 150 und 350°C. Wesentlich für die erfolgreiche Durchführung der Copolymerisation ist, daß man in Gegenwart eines Polymerisationsreglers arbeitet.

Die bei den Verfahren des Standes der Technik erzielbaren, auf eingesetzte Monomere bezogene Polymerisatausbeuten befriedigen nicht. Überdies ist häufig zu beobachten, daß die Copolymerisat enthaltenden Mineralöldestillate über feinporige Brennstoffilter nur unzureichend filtrierbar sind.

Es bestand daher die Aufgabe` die bei der Mischpolymerisation von Ethylen mit Alkylcarbonsäurevinylester auftretenden, vorstehend beschriebenen Mängel zu beseitigen.

Die Erfindung besteht in einem Verfahren zur Herstellung von Mischpolymerisaten des Ethylens mit Alkylcarbonsäurevinylestern durch Umsetzung der Monomeren bei Temperaturen von 125 bis 300°C und Drücken von 100 bis 300 MPa in Gegenwart Radikale bildender Initiatoren und gegebenenfalls eines Molekularmassereglers. Es ist dadurch gekennzeichnet, daß der Alkylcarbonsäurevinylester in einem Lösungsmittel gelöst gleichzeitig aber getrennt von den Radikale bildenden Initiatoren der Reaktionszone zugeleitet wird.

Überraschenderweise führen die erfindungsgemäße Maßnahmen nicht nur zu einer beträchtlichen Erhöhung der Polymerisatausbeute, auch die Filtrierbarkeit der Produkte wird deutlich verbessert. Es war in Kenntnis des Standes der Technik oder aus theoretischen Erwägungen nicht zu erwarten, daß durch Steuerung der Stoffströme die vorteilhaften Ergebnisse erzielt werden können.

Ein wesentliches Merkmal der erfindungsgemäßen Arbeitsweise ist die getrennte, jedoch gleichzeitige Zuführung von Alkylcarbonsäurevinylester und Initiator in die Reaktionszone. In der Praxis werden beide Reaktionsteilnehmer über separate Leitungen in den Reaktor eingespeist. Abgesehen von dieser grundlegenden Maßnahme können die übrigen Reaktanten, also insbesondere Ethylen und Moderator sowohl mit dem Vinylesterstrom als auch mit dem Initiatorstrom oder auch verteilt auf die beiden Ströme der Reaktionszone, zugeführt werden. Es ist auch möglich, jeweils eigene Leitungen für Ethylen und den Moderator vorzusehen, doch ist eine solche Aufteilung der Stoffströme nicht erforderlich und im Hinblick auf die technische Ausgestaltung des Reaktors, auch nicht immer zweckmäßig. Andere Verteilungen der Reaktanten auf die zur Reaktionszone führenden Leitungen sind möglich, sofern die strikte Trennung von Vinylesterstrom und Initiatorstrom eingehalten wird.

Ein weiterer wichtiger Aspekt des erfindungsgemäßen Verfahrens ist der Einsatz des Vinylestermonomeren in Form einer Lösung. Verwendet werden Lösungen, in denen die Alkylcarbonsäurevinylester-Konzentration 5 bis 95, insbesondere 20 bis 80 Gew.-%, bezogen auf die Lösung, beträgt. Als Lösungsmittel haben sich aliphatische und aromatische Kohlenwasserstoffe mit 5 bis 10 Kohlenstoffatomen oder deren Gemische bewährt. Geeignet sind z.B. aromatische Kohlenwasserstoffe wie Benzol oder Toluol, aliphatische Kohlenwasserstoffe wie n-Hexan, n-Heptan, n-Octan oder Isooctan, ferner cycloaliphatische Kohlenwasserstoffe wie Cyclopentan oder Cyclohexan und Kohlenwasserstoffgemische wie Isopar^{R} (ein Gemisch verschiedener Isoparaffine; Handelsprodukt der Exxon) und Exxsol^{R} (hydrierte Mineralölfraktion; Handelsprodukt der Exxon). Auch polare Lösungsmittel wie Alkohole, Aldehyde, Ketone oder Ester, haben sich bewährt.

Die übrigen Reaktionsteilnehmer können ebenfalls in Form von Lösungen eingesetzt werden, wobei als Lösungsmittel die bereits für die Alkylcarbonsäurevinylester genannten Stoffe oder Stoffmischungen Anwendung finden. Im Gegensatz zu den Vinylestermonomeren ist es aber ohne Nachteil für das Ergebnis der Umsetzung möglich, diese Reaktanten auch unverdünnt, d.h. ohne Lösungsmittel in den Polymerisationsprozeß einzubringen.

Unter dem Begriff Radikale bildende Initiatoren versteht man die auch bei der Hochdruckpolymerisation von Ethylen eingesetzten Verbindungen, z.B. Sauerstoff, Peroxide, Hydroperoxide und Azoverbindungen. Beispiele für bewährte Initiatoren sind Di-tert.-butylperoxid, tert.-Butylperbenzoat, tert.-Butylperoxipivalat und Dilaurylperoxid, ferner tert.-Butylhydroperoxid und p-Menthanhydroperoxid, sowie Azobis(isobutyronitril). Die Peroxide können auch als Gemisch aus 2 oder mehreren Verbindungen sowie als Mischung aus Peroxid und Sauerstoff eingesetzt werden. Die Konzentration der Initiatoren beträgt von 1 Gew.-ppm bis 50 · 10³ Gew.-ppm, insbesondere von 10 Gew.-ppm bis 25 · 10³ Gew.-ppm, bezogen auf die eingesetzte Ethylenmenge.

Die Molekularmasse der nach dem erfindungsgemäßen Verfahren hergestellten Polymerisate kann in bekannter Weise mit Hilfe von Molekularmassereglern (Moderatoren) gesteuert werden. Geeignet hierfür sind Aceton, n-Butyraldehyd, Cyclohexanon, Propionaldehyd, Methylethylketon, Tetrahydrofuran, 1,3-Dioxalan, n-Heptaldehyd, Cyclopentan, Buten-1. Die Molekularmasseregler werden dem Reaktionsgemisch aus Ethylen und dem Alkylcarbonsäurevinylester in Mengen von 0 bis 4, vorzugsweise von 0 bis 2 Gew.-%, bezogen auf das Monomerengemisch, zugesetzt.

Die Monomeren werden bei Drücken von 100 bis 300 MPa und bevorzugt von 150 bis 250 MPa copolymerisiert. Die Polymerisationstemperaturen liegen im Bereich von 125 bis 300°C, vorzugsweise von 150 bis 275°C.

Das neue Verfahren wird in dem für die Polymerisation von Ethylen unter erhöhtem Druck und bei erhöhter Temperatur üblichen Apparaturen, z.B. Autoklaven oder Rohrreaktoren, durchgeführt. Einzelheiten sind dem Fachmann bekannt und auch in der Literatur ausführlich beschrieben, z.B. in Ullmanns Encyclopädie der Technischen Chemie, 4. Auflage (1980), Bd. 19, Seite 169 bis 178. Es erübrigt sich daher, hier näher auf die Polymerisationstechnik einzugehen.

Die Polymerisation kann kontinuierlich oder auch diskontinuierlich erfolgen. Besonders bewährt hat es sich, kontinuierlich in Rohrreaktoren zu polymerisieren. Vorteilhaft ist es in diesem Fall, nur einen Teil der Reaktionspartner über den Reaktoreingang der Reaktionszone zuzuführen. Der Rest wird über einen Seitenast oder über mehrere Seitenäste, die längs des Reaktors angeordnet sind, zweckmäßig im Bereich von Spitzentemperaturen, in die Reaktionszone geleitet. Die Verweilzeit der Comonomeren im Reaktor beträgt 30 bis 150, vorzugsweise 50 bis 130 Sekunden.

Nach dem neuen Verfahren können Copolymerisate des Ethylens, die 10 bis 50, vorzugsweise 20 bis 40 Gew.-% Alkylcarbonsäurevinylester (bezogen auf das Copolymerisat) enthalten, hergestellt werden. Die monomeren Vinylester leiten sich von geradkettigen oder verzweigten aliphatischen Monocarbonsäuren ab und enthalten vorzugsweise 4 bis 10 Kohlenstoffatome. Beispiele für solche Ester sind Vinylacetat, Vinylpropionat, Vinylbutyrat und Vinylpivalat.

Von besonderer Bedeutung sind Copolymerisate mit einem Anteil (bezogen auf das Copolymerisat) von 20 bis 40 und insbesondere von 25 bis 35 Gew.-% Alkylcarbonsäurevinylester und einer Molekularmasse (gemessen durch Dampfdruckosmometrie) von 500 bis 5 000 g/mol, vorzugsweise von 1 000 bis 3 000 g/mol. Solche Copolymerisate finden als Zusatz zu Mineralöl und Mineralölfraktionen, insbesondere Mitteldestillaten, Verwendung, deren Fließfähigkeit bei tiefen Temperaturen sie erhöhen. Zu diesem Zweck setzt man dem Mineralöl bzw. dessen Destillaten Lösungen zu, die 20 bis 70 Gew.-% (bezogen auf die Lösung) der Copolymerisate enthalten. Als Lösungsmittel geeignet sind aliphatische oder aromatische Kohlenwasserstoffe oder Kohlenwasserstoffgemische, z.B. Benzinfraktionen, insbesondere Kerosin. Die zur Verbesserung der Fließfähigkeit zugesetzte Copolymerisatmenge soll, bezogen auf das Mineralöl bzw. die Mineralölfraktionen, 0,001 bis 2, vorzugsweise 0,005 bis 0,5 Gew.-% betragen. Die Copolymerisatgemische können allein oder zusammen mit anderen Additiven verwendet werden, z.B. mit anderen Stockpunkterniedrigern oder Entwachsungshilfsmitteln, mit Korrosionsinhibitoren, Antioxidantien, Schlamminhibitoren und Zusätzen zur Erniedrigung des Cloud-Points.

Das erfindungsgemäße Verfahren wird durch die nachfolgenden Beispiele näher erläutert, ist aber selbstverständlich nicht auf diese speziellen Ausführungsformen beschränkt.

### Herstellung der Ethylen/Vinylacetat-Copolymerisate

### Beispiele 1-6

Ethylen und Vinylacetat werden kontinuierlich in einem Rührautoklaven copolymerisiert. Hierzu wird das Reaktionsgemisch, bestehend aus Ethylen, Vinylacetat, dem Lösungsmittel Exxsol und Propionaldehyd als Molekularmassenregler unter Reaktionsdruck in den Autoklaven eingespeist. Als Initiator wird getrennt von den übrigen Reaktionspartnern t-Butylperoxipivalat gelöst in Testbenzin (75 Gew.-% Peroxiverbindung, bezogen auf die Lösung) der Reaktionszone in dem Maße zugesetzt, daß sich die in Tabelle 1 aufgeführte Reaktionstemperatur einstellt. Die gewünschte Produktviskosität (kennzeichnend für die Molekularmasse) wird über den Zusatz von Propionaldehyd gesteuert. Weitere Angaben sind Tabelle 1 zu entnehmen.

### Beispiele 7-11

Abweichend von der Arbeitsweise der Beispiele 1-6 wird anstelle von Exxsol Isopar L als Lösungsmittel eingesetzt.

### Beispiele 12-14

Abweichend von der Arbeitsweise der Beispiele 1-6 wird anstelle von Exxsol Kerosin als Lösungsmittel eingesetzt.

### Beispiele 15-17

Abweichend von der Arbeitsweise der Beispiele 1-6 wird anstelle von Exxsol Heptan als Lösungsmittel eingesetzt.

### Vergleichsbeispiele 18-20

Abweichend von der Arbeitsweise der Beispiele 1-17 wird ohne Lösungsmittelzusatz polymerisiert.

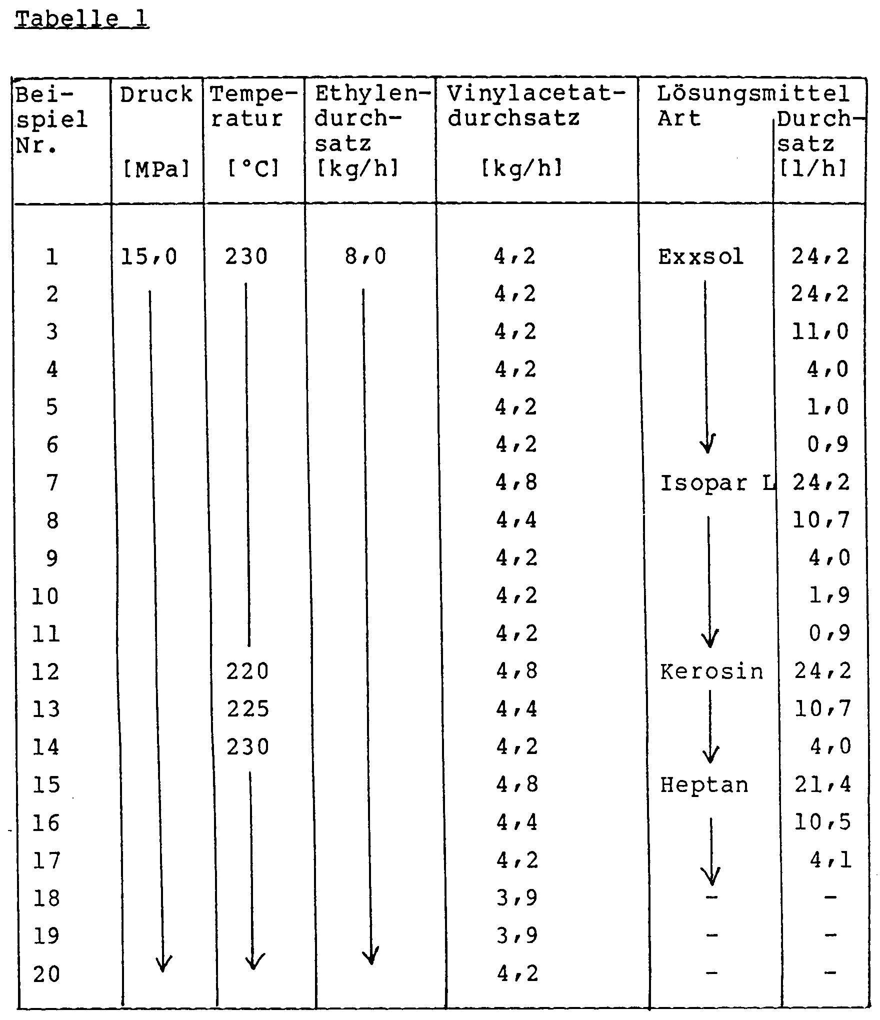

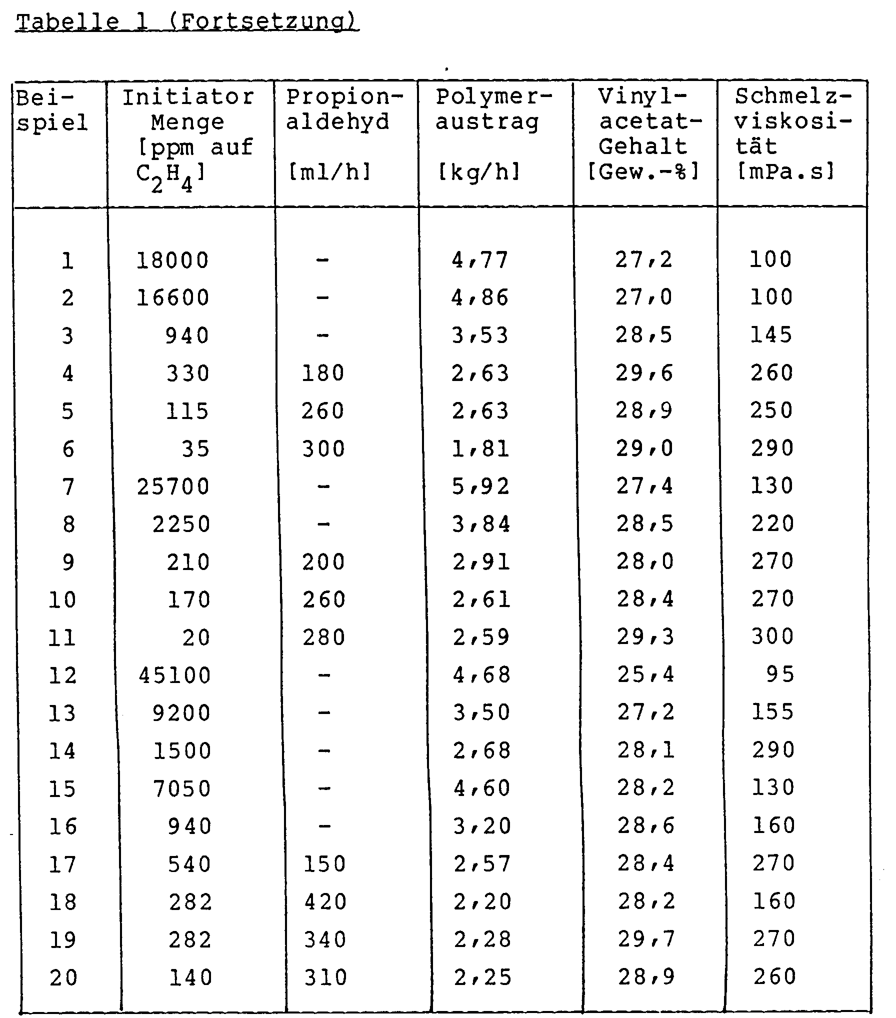

### Ausbeutebestimmung

In Tabelle 2 sind die erzielten Polymerisationsausbeuten, bezogen auf monomerfreies Polymerisat, zusammengestellt. Durch Zusatz von Lösungsmitteln sind danach Ausbeuteverbesserungen von bis zu 150 % gegenüber den Vergleichsbeispielen möglich.

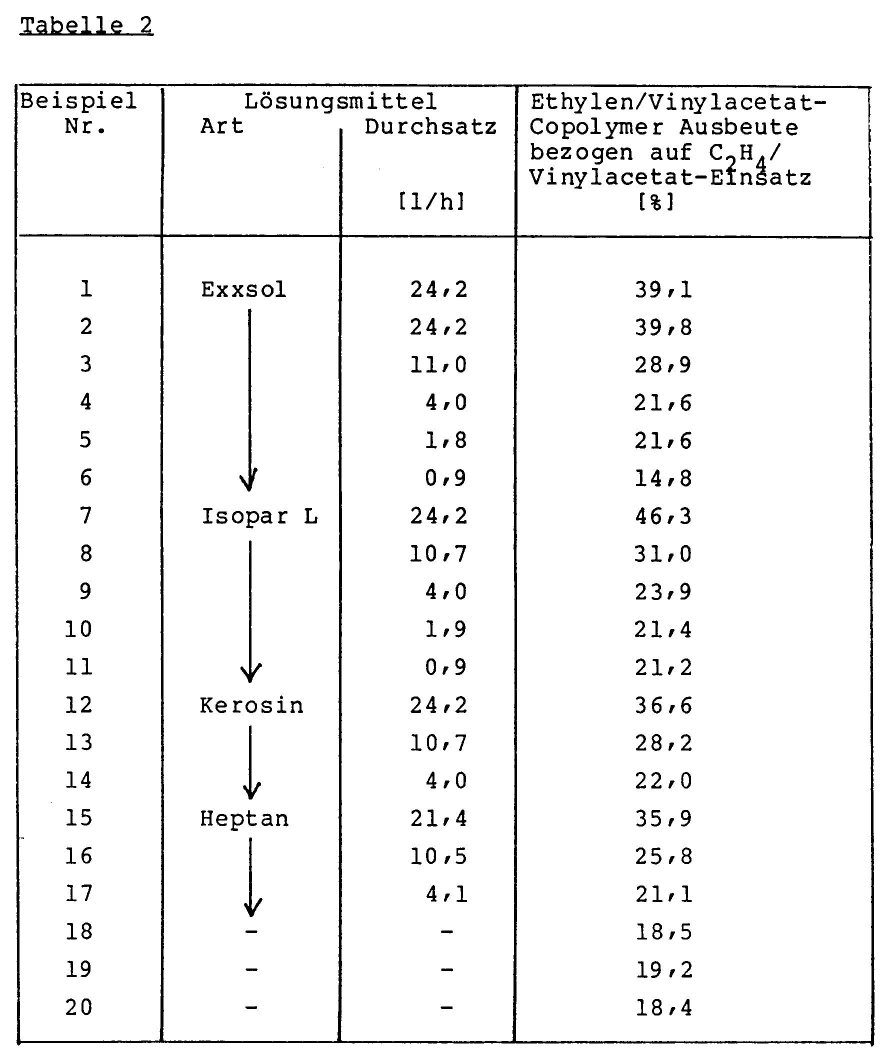

### Löslichkeitstest

Die Löslichkeit der Copolymerisate wird durch Filtration nach folgenden Verfahren bestimmt: 400 Gew.-ppm einer 50 Gew.-%igen Dispersion von Ethylen/Vinylacetat-Mischpolymerisat in Kerosin werden bei 20°C 2 min in das Testöl eingerührt. Danach wird ein Prüfvolumen von 50 ml bei einem angelegten Vakuum von 300 mbar (300 hPa) über ein Whatman PTFE-Filter (⌀ 12 mm, Porenweite 3 µm) filtriert und die Filtrationszeit bestimmt. Bei Filtrationszeiten >900 s wird alternativ das Filtratvolumen angegeben.

In Tabelle 3 sind die Ergebnisse der Löslichkeitstests zusammengestellt.

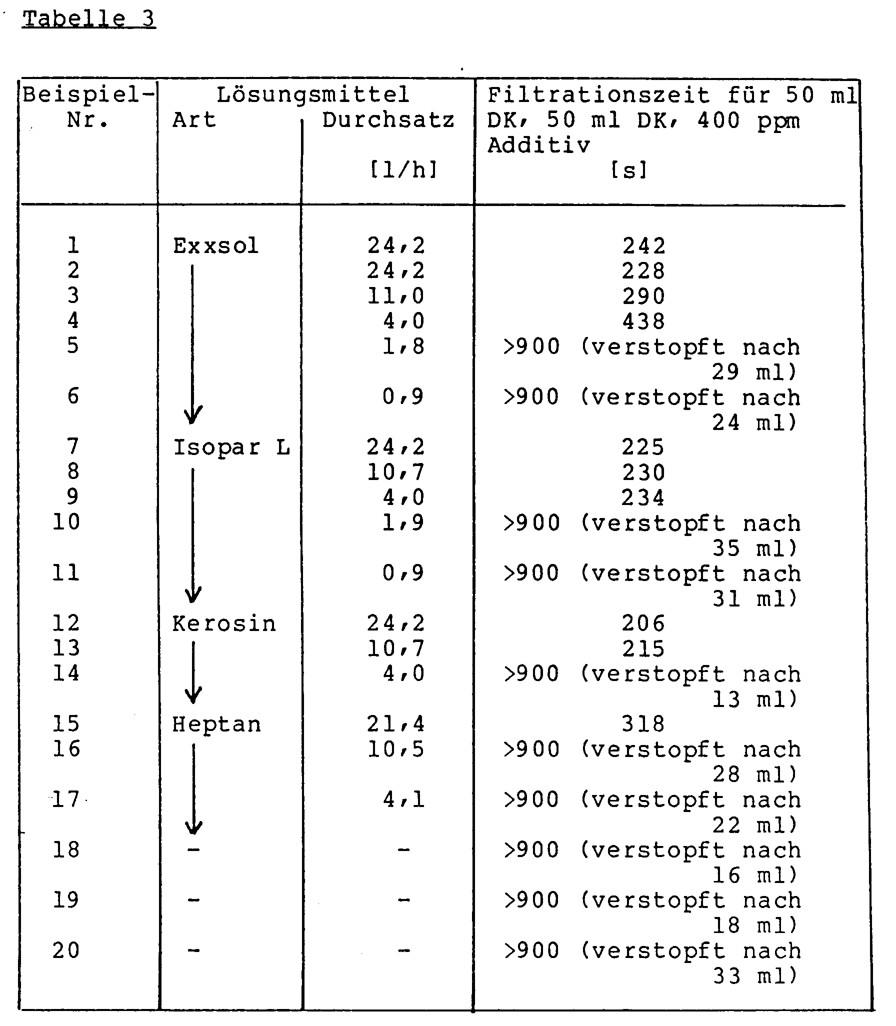

### Wirksamkeit der Polymerisate als Fließverbesserer

Die Wirksamkeit der nach dem erfindungsgemäßen Verfahren hergestellten Copolymerisate zur Verbesserung der Fließfähigkeit von Mineralölen und Mineralöldestillaten wird durch den "Kalt-Filter-Verstopfungspunkt-Test" (CFPP-Test) beschrieben. Die Durchführung des Tests erfolgt nach DIN 51428. Sie ist auch im J. of the Inst. of Petr. Bd. 52, Juni 1966, Seiten 173 bis 185 publiziert.

Zur Prüfung werden drei Mitteldestillate M 1, M 2 und M 3 eingesetzt, die durch den Cloud Point (nach DIN 51597) und den CFPP-Blindwert charakterisiert sind. Die Ergebnisse sind in Tabelle 4 zusammengestellt.

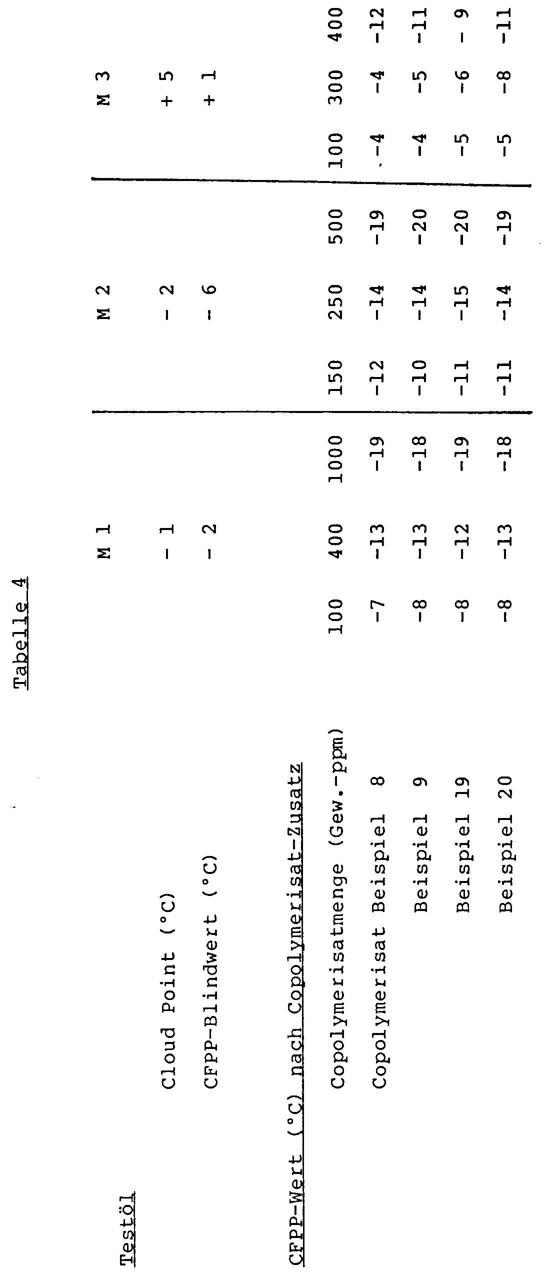

## Patentansprüche

1. Verfahren zur Herstellung von Mischpolymerisaten des Ethylens mit Alkylcarbonsäurevinylestern einer Molekularmasse von 500 bis 5.000 g/mol, vorzugsweise 1.000 bis 3.000 g/mol und einem Anteil von 20 bis 40 Gew.-% (bezogen auf das Mischpolymerisat) Alkylcarbonsäurevinylestern, durch Umsetzung der Monomeren bei Temperaturen von 125 bis 300°C und Drücken von 100 bis 300 MPa in Gegenwart Radikale bildender Initiatoren und gegebenenfalls eines Molekularmassereglers, dadurch gekennzeichnet, daß der Alkylcarbonsäurevinylester in einem Lösungsmittel gelöst, gleichzeitig aber getrennt von den Radikale bildenden Initiatoren der Reaktionszone zugeleitet wird.

2. Verfahren nach Anspruch 1, dadurch gekennzeichnet, daß das Mischpolymerisat 25 bis 35 Gew.-% Alkylcarbonsäurevinylester (bezogen auf das Mischpolymerisat) enthält.

3. Verfahren nach Anspruch 1 oder 2, dadurch gekennzeichnet, daß der Alkylcarbonsäurevinylester sich von einer geradkettigen oder verzweigten aliphatischen Monocarbonsäure ableitet und 4 bis 10 Kohlenstoffatome enthält.

4. Verfahren nach einem oder mehreren der Ansprüche 1 bis 3, dadurch gekennzeichnet, daß der Alkylcarbonsäurevinylester Vinylacetat ist.

5. Verfahren nach einem oder mehreren der Ansprüche 1 bis 4, dadurch gekennzeichnet, daß der Alkylcarbonsäurevinylester als Lösung, die 5 bis 95, insbesondere 20 bis 80 Gew.-% des Alkylcarbonsäurevinylesters (bezogen auf die Lösung) enthält, eingesetzt wird.

6. Verfahren nach einem oder mehreren der Ansprüche 1 bis 5, dadurch gekennzeichnet, daß als Lösungsmittel für den Alkylcarbonsäurevinylester aliphatische oder aromatische Kohlenwassersoffe mit 5 bis 10 Kohlenstoffatomen im Molekül oder deren Gemische verwendet werden.

7. Verfahren nach einem oder mehreren der Ansprüche 1 bis 6, dadurch gekennzeichnet, daß das Monomerengemisch bei Drücken von 100 bis 300 MPa, vorzugsweise 150 bis 250 MPa und bei Temperaturen von 125 bis 300°C, vorzugsweise 150 bis 275°C polymerisiert wird.

8. Verfahren nach einem oder mehreren der Ansprüche 1 bis 7, dadurch gekennzeichnet, daß als Initiatoren Sauerstoff und/oder Peroxide und/oder Hydroperoxide oder Azoverbindungen in einer Konzentration von 1 Gew.-ppm bis 50 . 10³ Gew.-ppm, insbesondere 10 Gew.-ppm bis 25 . 10³ Gew.-ppm, bezogen auf die eingesetzte Ethylenmenge, verwendet werden.

9. Verfahren nach einem oder mehreren der Ansprüche 1 bis 8, dadurch gekennzeichnet, daß das Monomerengemisch in Gegenwart von 0 bis 4, vorzugsweise 0 bis 2 Gew.-% (bezogen auf das Monomerengemisch) eines Moderators polymerisiert wird.

10. Verwendung von Mischpolymerisaten, die nach einem oder mehreren der Ansprüche 1 bis 9 hergestellt wurden zur Verbesserung der Fließfähigkeit von Mineralölen oder Mineralölfraktionen, insbesondere von Mitteldestillaten.

## Claims

1. A process for preparing copolymers of ethylene with alkyl carboxylic acid vinyl esters having a molar mass of 500 to 5,000 g . mol⁻¹, preferably 1,000 to 3,000 g . mol⁻¹ and a content of 20 to 40 wt % (related to the copolymer) of alkyl carboxylic acid vinyl esters by reacting the monomers at temperatures of 125 to 300°C and pressures of 100 to 300 MPa in the presence of radical-forming initiators and, optionally, a molar mass regulator, characterised in that the alkyl carboxylic acid vinyl ester is dissolved in a solvent, but at the same time fed into the reaction zone separate from the radical-forming initiators.

2. A process according to claim 1, characterised in that the copolymer contains 25 to 35 wt % of alkyl carboxylic acid vinyl ester (related to the copolymer).

3. A process according to claim 1 or 2, characterised in that the alkyl carboxylic acid vinyl ester is derived from a straight-chain or branched aliphatic monocarboxylic acid and contains 4 to 10 carbon atoms.

4. A process according to one or more of claims 1 to 3, characterised in that the alkyl carboxylic acid vinyl ester is vinyl acetate.

5. A process according to one or more of claims 1 to 4, characterised in that the alkyl carboxylic acid vinyl ester is used as a solvent containing 5 to 95, in particular 20 to 80 wt % of the alkyl carboxylic acid vinyl ester (related to the solution).

6. A process according to one or more of claims 1 to 5, characterised in that aliphatic or aromatic hydrocarbons having 5 to 10 carbon atoms in the molecule or mixtures thereof are used as the solvent for the alkyl carboxylic acid vinyl ester.

7. A process according to one or more of claims 1 to 6, characterised in that the monomer mixture is polymerised at pressures of 100 to 300 MPa, preferably 150 to 250 MPa and at temperatures of 125 to 300°C, preferably 150 to 275°C.

8. A process according to one or more of claims 1 to 7, characterised in that oxygen and/or peroxides and/or hydroperoxides or azo compounds are used as initiators in a concentration of 1 ppm by weight to 50 . 10³ ppm by weight, in particular 10 ppm by weight to 25 . 10³ ppm by weight, related to the amount of ethylene used.

9. A process according to one or more of claims 1 to 8, characterised in that the monomer mixture is polymerised in the presence of 0 to 4, preferably 0 to 2 wt % (related to the monomer mixture) of a moderator.

10. The use of copolymers prepared according to one or more of claims 1 to 9 to improve the fluidity of mineral oils or mineral oil fractions, in particular middle distillates.

## Revendications

1. Procédé de préparation de copolymères de l'éthylène et d'alkylcarboxylates de vinyle à un poids moléculaire de 500 à 5 000 g/mol, de préférence de 1 000 à 3 000 g/mol et à une teneur en alkylcarboxylate de vinyle de 20 à 40 % du poids du copolymère, par réaction des monomères à des températures de 125 à 300°C sous des pressions de 100 à 300 MPa en présence d'inducteurs radicalaires et le cas échéant d'un régulateur du poids moléculaire, caractérisé en ce que l'on envoie l'alkylcarboxylate de vinyle à la zone de réaction à l'état de solution dans un solvant en même temps que l'inducteur radicalaire mais séparément de celui-ci.

2. Procédé selon la revendication 1, caractérisé en ce que le copolymère contient 25 à 35 % de son poids d'alkylcarboxylate de vinyle.

3. Procédé selon la revendication 1 ou 2, caractérisé en ce que l'alkylcarboxylate de vinyle dérive d'un acide monocarboxylique aliphatique à chaîne droite ou ramifiée et contient de 4 à 10 atomes de carbone.

4. Procédé selon une ou plusieurs des revendications 1 à 3, caractérisé en ce que l'alkylcarboxylate de vinyle est l'acétate de vinyle.

5. Procédé selon une ou plusieurs des revendications 1 à 4, caractérisé en ce que l'alkylcarboxylate de vinyle est mis en oeuvre à l'état de solution contenant de 5 à 95, plus spécialement de 20 à 80 de son poids de l'alkylcarboxylate de vinyle.

6. Procédé selon une ou plusieurs des revendications 1 à 5, caractérisé en ce que l'on utilise en tant que solvants pour l'alkylcarboxylate de vinyle des hydrocarbures aliphatiques ou aromatiques en C₅-C₁₀ ou leurs mélanges.

7. Procédé selon une ou plusieurs des revendications 1 à 6, caractérisé en ce que l'on polymérise le mélange des monomères sous des pressions de 100 à 300 MPa, de préférence de 150 à 250 MPa et à des températures de 125 à 300°C, de préférence de 150 à 275°C.

8. Procédé selon une ou plusieurs des revendications 1 à 7, caractérisé en ce que l'on utilise en tant qu'inducteurs l'oxygène et/ou des peroxydes et/ou des hydroperoxydes ou des dérivés azoïques à une concentration allant de 1 à 50 x 10³ ppm en poids, plus spécialement de 10 à 25 x 10³ ppm en poids par rapport à la quantité d'éthylène mise en oeuvre.

9. Procédé selon une ou plusieurs des revendications 1 à 8, caractérisé en ce que l'on polymérise le mélange des monomères en présence de 0 à 4 %, de préférence de 0 à 2 % de son poids d'un régulateur du poids moléculaire.

10. Utilisation des copolymères préparés selon une ou plusieurs des revendications 1 à 9 pour améliorer la fluidité des pétroles ou fractions de pétrole, en particulier des distillats moyens.
